# EUROPÄISCHE PATENTANMELDUNG

(11) **EP 0 839 994 A2**
(43) Veröffentlichungstag der Anmeldung: **06.05.1998**
(21) Anmeldenummer: 97115196.4
(22) Anmeldetag: 02.09.1997
(51) Int. Cl.: F01N 3/20, F01N 9/00

(54) **Verfahren zum elektrischen Beheizen eines Katalysators**

(30) Priorität: 31.10.1996 DE 19645016
(71) Anmelder: SIEMENS AKTIENGESELLSCHAFT, 80333 München (DE)
(72) Erfinder: Angermaier, Anton, 84172 Thann (DE); Hacker, Franz, 93059 Regensburg (DE)

(57) **Zusammenfassung**

Es wird ein Verfahren zum Beheizen eines elektrischen Katalysator beschrieben, bei dem nach dem Start des Beheizens die Spannung der Spannungsquelle 5 als Referenzspannung gemessen wird und während des Beheizens die Spannung der Spannungsquelle als aktuelle Spannung gemessen wird und die aktuelle Spannung mit der Referenzspannung verglichen wird. Das Beheizen des Katalysators 3 wird abgebrochen, wenn die Differenz zwischen der aktuellen Spannung und der Referenzspannung größer als eine vorgegebene Differenzspannung ist.

## Beschreibung

Die Erfindung betrifft ein Verfahren zum elektrischen Beheizen eines Katalysators gemäß dem Oberbegriff des Anspruchs 1.

Für eine besonders geringe Emission von Schadstoffen ist es insbesondere bei einem Neustart einer Brennkraftmaschine notwendig, daß der Katalysator schnell auf seine Betriebstemperatur aufgeheizt wird. Dazu ist beispielsweise eine elektrische Heizvorrichtung vorgesehen, die den Katalysator elektrisch aufheizt.

Eine entsprechende elektrische Heizvorrichtung für einen Katalysator ist beispielsweise aus "Die Systementwicklung des elektrisch heizbaren Katalysators", Erhard Otto et al., Motortechnische Zeitschrift 56 (1995) 9, Seite 488 ff bekannt.

Die Stromversorgung des elektrisch beheizten Katalysators ist ein besonderes Problemfeld, da sie gravierende Rückwirkungen auf das Bordnetz und den Motorbetrieb hat. Es ist eine entsprechende Steuerung vorgesehen, die einen Schutz vor unzulässiger Tiefentladung der Batterie gewährleistet. Ein Einschalten der elektrischen Heizung erfolgt nur, wenn die Bordspannung größer als ein applizierbarer Schwellwert ist. Zudem muß die Bordnetzspannung während des Heizbetriebes oberhalb eines Schwellwertes, in der Regel 9 Volt, liegen. Wird diese Bedingung nicht erfüllt, so wird die Katalysatorheizung abgeschaltet.

Die Aufgabe der Erfindung beruht darin, eine Entladung der Spannungsquelle, die den elektrisch beheizten Katalysator versorgt, zu vermeiden.

Die Aufgabe der Erfindung wird durch die Merkmale des Anspruchs 1 gelöst. Ein wesentlicher Vorteil der Erfindung besteht darin, daß beim Start der Beheizung die Spannung als Referenzspannung gemessen wird, daß die Spannung während des Beheizens des Katalysators laufend als aktuelle Spannung ermittelt wird und mit der Referenzspannung verglichen wird, und daß das Beheizen des Katalysators abgebrochen wird, wenn die Differenz zwischen der Referenzspannung und der aktuellen Spannung größer als ein Differenzwert ist. Auf diese Weise wird aufgrund des Spannungsabfalles während des Beheizens die Güte der Spannungsquelle bestimmt und abhängig von der Güte das Beheizen abgebrochen oder weitergeführt.

Weitere vorteilhafte Ausbildungen und Verbesserungen der Erfindung sind in den Unteransprüchen angegeben.

Die Erfindung wird anhand der Figuren näher erläutert; es zeigen:
- Figur 1: eine Brennkraftmaschine mit einem elektrisch beheizbaren Katalysator,
- Figur 2: ein Verfahren zum elektrischen Beheizen des Katalysators und
- Figur 3: den Spannungsverlauf der Batterie, die den elektrisch beheizbaren Katalysator mit Energie versorgt.

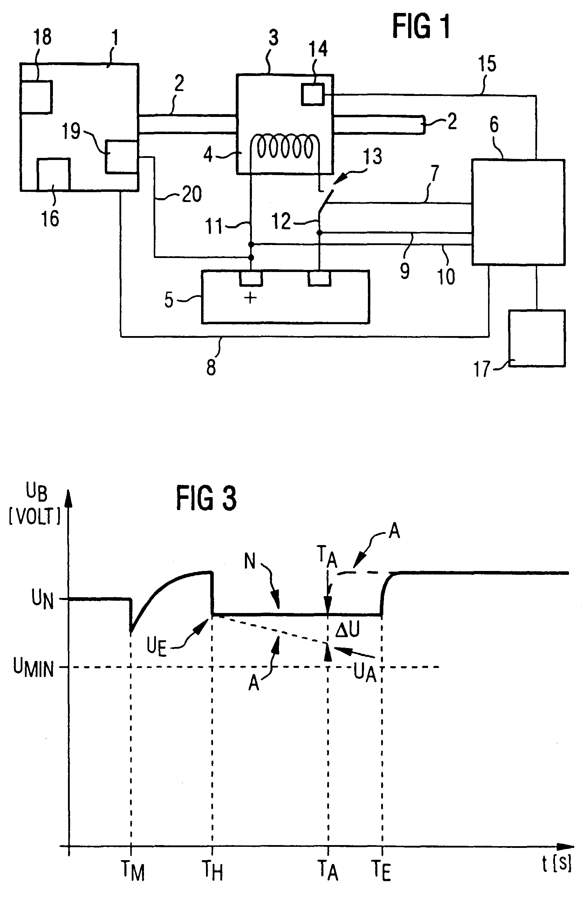

Figur 1 zeigt eine Brennkraftmaschine 1, die einen Auspuff 2 aufweist, der mit einem Katalysator 3 versehen ist. Der Katalysator 3 weist eine elektrische Heizvorrichtung 4 auf, die den Katalysator 3 auf eine vorgegebene Betriebstemperatur aufheizt. Die Heizvorrichtung 4 wird von einer Spannungsquelle, beispielsweise einer Batterie 5 oder einem Kondensator mit elektrischer Energie versorgt. Im folgenden wird das Ausführungsbeispiel anhand einer Batterie 5 erläutert. Die Batterie 5 ist mit einem Pluspol über eine erste Versorgungsleitung 11 an die Heizvorrichtung 4 angeschlossen. Der Minuspol ist über eine zweite Versorgungsleitung 12 und einen Schalter 13 ebenfalls mit der Heizvorrichtung 4 verbunden. In einer einfachen Ausbildung weist die Heizvorrichtung 4 als Heizelement beispielsweise einen Widerstandsdraht auf.

Es ist zudem ein Steuergerät 6 vorgesehen, das über einen Datenbus 8 mit der Brennkraftmaschine 1, über eine zweite Meßleitung 9 mit der zweiten Versorgungsleitung 12, über eine erste Meßleitung 10 mit der ersten Versorgungsleitung 11 und über eine Steuerleitung 7 mit dem ansteuerbaren Schalter 13 verbunden ist. Das Steuergerät 6 ist zudem über eine Sensorleitung 15 mit einem Temperatursensor 14 verbunden, der am Katalysator 3 angeordnet ist.

Die Brennkraftmaschine 1 verfügt über einen Luftmassenmesser 18, der im Ansaugkanal angeordnet ist und die von der Brennkraftmaschine angesaugte Luftmasse mißt. Weiterhin verfügt die Brennkraftmaschine 1 über einen Kühler 16, der mit Kühlflüssigkeit gefüllt ist, die über Kühlkanäle, die in die Brennkraftmaschine eingebracht sind, die Brennkraftmaschine kühlt. Zudem ist ein Generator 19 an der Brennkraftmaschine 1 vorgesehen, der von der Brennkraftmaschine angetrieben wird und über eine Ladeleitung 20 die Batterie 5 auflädt.

Das Steuergerät 6 steuert in Abhängigkeit von Parametern der Brennkraftmaschine 1, der Spannung der Batterie 5 und der Temperatur des Katalysators 3 die elektrische Heizvorrichtung 4, mit der der Katalysator 3 auf seine vorgegebene Betriebstemperatur aufgeheizt wird.

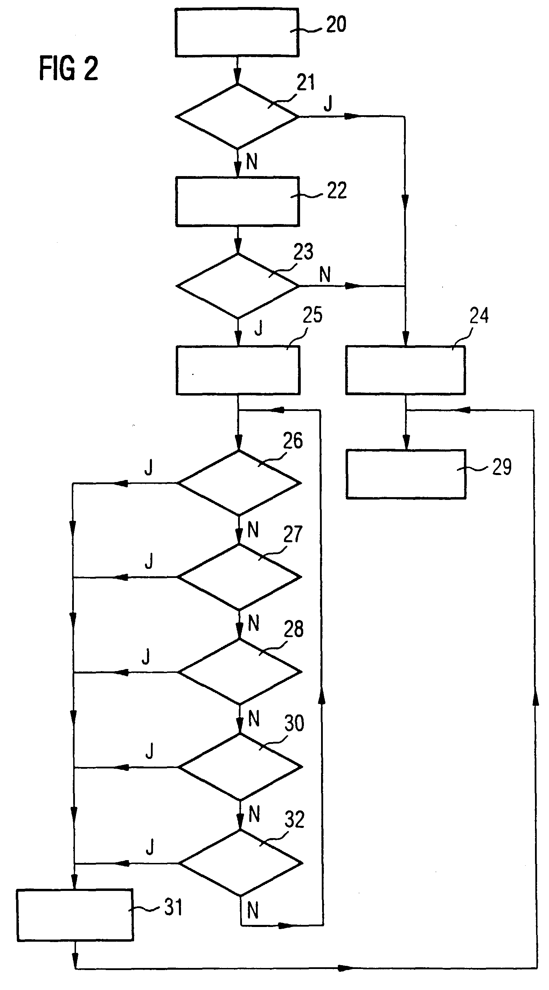

Anhand von Figur 2 wird ein Verfahren zur Steuerung der elektrischen Heizvorrichtung 4 beschrieben.

Bei Programmpunkt 20 mißt das Steuergerät 6 beim Start der Brennkraftmaschine 1 die Temperatur des Katalysators 3. Bei Programmpunkt 21 vergleicht das Steuergerät 6 die gemessene Temperatur des Katalysators 3 mit einer im Speicher 17 abgelegten Katalysatortemperatur. Die abgelegte Katalysatortemperatur entspricht vorzugsweise der optimalen Betriebstemperatur des Katalysators von beispielsweise 350°C.

Ergibt der Vergleich, daß die gemessene Katalysatortemperatur größer oder gleich der abgelegten Katalysatortemperatur ist, so wird nach Programmpunkt 24 verzweigt und keine elektrische Beheizung des Katalysators vorgenommen, da der Katalysator 3 ausreichend warm ist.

Ergibt jedoch die Anfrage bei Programmpunkt 21, daß die Temperatur des Katalysators 3 kleiner als die abgelegte Katalysatortemperatur ist, so wird anschließend nach Programmpunkt 22 verzweigt.

Anstelle der bei Programmpunkt 21 gemessenen Katalysatortemperatur wird in einer Weiterbildung der Erfindung die Temperatur des Kühlers 16, bzw. die Temperatur der Kühlflüssigkeit über einen Meßfühler gemessen und über den Datenbus 8 dem Steuergerät 6 mitgeteilt. Das Steuergerät 6 vergleicht in diesem Fall die Temperatur des Kühlers 16 bzw. die Temperatur der Kühlflüssigkeit mit einer im Speicher 17 abgelegten Vergleichstemperatur. Ergibt der Vergleich, daß die Temperatur des Kühlers 16 bzw. die Temperatur der Kühlflüssigkeit größer als die abgelegte Vergleichstemperatur ist, so wird nach Programmpunkt 24 verzweigt und der Katalysator nicht elektrisch beheizt, da der Katalysator 3 noch ausreichend warm ist.

Ergibt jedoch der Vergleich bei Programmpunkt 21, daß die Temperatur des Kühlers 16 bzw. die Temperatur der Kühlflüssigkeit kleiner als die abgelegte Vergleichstemperatur ist, so wird nach Programmpunkt 22 verzweigt.

Bei Programmpunkt 22 wartet das Steuergerät 6, bis eine vorgegebene Zeit nach dem Start der Brennkraftmaschine 1 vergangen ist, da während des Starts die Spannung der Batterie 5 stark belastet ist. Anschließend überprüft das Steuergerät 6 bei Programmpunkt 23, ob die Spannung der Batterie 5 über einen im Speicher 17 abgelegten Mindestwert liegt. Ist dies nicht der Fall, so wird nach Programmpunkt 24 verzweigt und der Katalysators 3 nicht elektrisch beheizt, da die gemessene Spannung der Batterie 5 nicht ausreicht, um den Katalysator 3 zu beheizen, ohne die Spannungsversorgung des Fahrzeuges zu beeinträchtigen.

Ergibt jedoch die Abfrage bei Programmpunkt 23, daß die Spannung der Batterie 5 über dem Mindestwert liegt, so wird anschließend bei Programmpunkt 25 von dem Steuergerät 6 der Schalter 13 geschlossen und somit die elektrische Heizvorrichtung 4 mit Spannung versorgt, so daß der Katalysator 3 elektrisch aufgeheizt wird. Nach dem Start des Beheizens mißt das Steuergerät 6 zum Zeitpunkt T_{H} die Spannung der Batterie 5 und legt diese als Referenzspannung U_{E} im Speicher 17 ab.

Anschließend vergleicht das Steuergerät 6 bei Programmpunkt 26 die Drehzahl der Brennkraftmaschine 1 mit einer vorgegebenen Drehzahl. Liegt die Drehzahl der Brennkraftmaschine 1 über der vorgegebenen Drehzahl, so wird nach Programmpunkt 31 verzweigt. Bei Programmpunkt 31 wird vom Steuergerät 6 der Schalter 13 geöffnet und damit die elektrische Beheizung des Katalysators 3 abgebrochen.

Diese Überprüfung bietet den Vorteil, daß ein Beheizen verhindert wird, wenn das Beheizen zu nahezu keiner Erwärmung des Katalysators 3 führt. Bei einer hohen Drehzahl der Brennkraftmaschine 1 wird eine großer Abgasstrom durch den Katalysator 3 geblasen, der den Katalysator 3 kühlt. Liegt die Drehzahl über der vorgegebenen Drehzahl, so ist die Kühlung durch den Abgasstrom so groß, daß ein Beheizen des Katalysators 3 keine Erwärmung des Katalysators 3 bewirkt.

Ergibt der Vergleich bei Programmpunkt 26, daß die Drehzahl der Brennkraftmaschine 1 kleiner als die vorgegebene Drehzahl ist, so wird nach Programmpunkt 27 verzweigt.

Bei Programmpunkt 27 vergleicht das Steuergerät 6 die von der Brennkraftmaschine 1 angesaugte Luftmasse, die beispielsweise über den Luftmassenmesser 18 gemessen wird, mit einem im Speicher 17 abgelegten Luftmassenstrombereich. Ergibt der Vergleich, daß der gemessene Luftmassenstrom außerhalb des vorgegebenen Luftmassenstrombereiches liegt, so wird nach Programmpunkt 31 verzweigt und das Steuergerät 6 öffnet den Schalter 13. Ergibt jedoch der Vergleich bei Programmpunkt 27, daß der gemessene Luftmassenstrom innerhalb des vorgegebenen Luftmassenstrombereiches liegt, so wird nach Programmpunkt 28 verzweigt.

Die Gründe für diese Überwachung sind folgende:
Liegt zum einen der gemessene Luftmassenstrom über dem vorgegebenen Luftmassenstrombereich, so wird ein so großer Abgasstrom durch den Katalysator 3 geblasen, daß eine Beheizung des Katalysators 3 nicht zu einer Erwärmung des Katalysators 3 führt. Liegt zum anderen der gemessene Luftmassenstrom unter dem vorgegebenen Luftmassenstrombereich, so wird so wenig Luftmasse angesaugt, daß eine Fehlfunktion, wie z.B. ein Abwürgen der Brennkraftmaschine 1 vorliegt, so daß in diesem Fall eine Beheizung nicht sinnvoll ist. Der Luftmassenstrombereich ist vorteilhaft experimentell bestimmt.

Bei Programmpunkt 28 mißt das Steuergerät 6 die aktuelle Spannung der Spannungsquelle 5 und vergleicht die aktuelle Spannung mit der Referenzspannung. Ergibt der Vergleich, daß die Differenz zwischen der aktuellen Spannung und der Referenzspannung größer als eine vorgegebener Differenzspannung ist, so wird nach Programmpunkt 31 verzweigt und die elektrische Beheizung des Katalysators 3 abgebrochen. Die Differenzspannung, bei der ein Abbruch des Beheizens vorteilhaft ist, wird beispielsweise durch Versuche ermittelt.

Ergibt jedoch der Vergleich bei Programmpunkt 28, daß die Differenz kleiner als die Differenzspannung ist, so wird anschließend nach Programmpunkt 30 verzweigt

Bei Programmpunkt 30 vergleicht das Steuergerät 6 die aktuelle Spannung mit einer vorgegebenen Mindestspannung Uₘᵢₙ. Ist die aktuelle Spannung kleiner als die Mindestspannung, so wird nach Programmpunkt 31 verzweigt und sofort die elektrische Beheizung des Katalysators 3 abgebrochen.

Ergibt jedoch die Abfrage bei Programmpunkt 30, daß die aktuelle Spannung größer als die Mindestspannung Uₘᵢₙ ist, so wird anschließend nach Programmpunkt 32 verzweigt.

Bei Programmpunkt 32 vergleicht das Steuergerät 6, ob seit dem Einschalten der elektrischen Beheizung des Katalysators 3 eine vorgegebene Heizzeit, während der der Katalysator 3 beheizt werden soll, abgelaufen ist. Ist dies der Fall, so wird nach Programmpunkt 31 verzweigt und das Steuergerät 6 öffnet den Schalter 13, so daß die elektrische Beheizung des Katalysators 3 abgebrochen wird.

Wurde die Heizzeit noch nicht überschritten, so wird von Programmpunkt 32 zu Programmpunkt 26 zurückverzweigt.

Von Programmpunkt 31 und von Programmpunkt 24 ausgehend wird nach Programmpunkt 29 verzweigt, bei dem ein normaler Motorbetrieb ausgeführt wird, ohne daß eine elektrische Beheizung des Katalysators 3 erfolgt.

Figur 3 zeigt ein Beispiel, das die Messungen bei Programmpunkt 28 genauer erläutert. In Figur 3 ist die Batteriespannung U_{B} in Volt in Abhängigkeit von der Zeit t aufgetragen und die Mindestspannung Uₘᵢₙ eingezeichnet. Der Mindestwert, der bei Programmpunkt 23 verwendet wird kann vorteilhafterweise gleich der Mindestspannung sein, wird im allgemeinen jedoch größer als die Mindestspannung gewählt.

Die Spannung der Batterie 5 weist ohne Motorbetrieb und ohne Beheizen des Katalysators eine Normalspannung U_{N} auf, die nach dem Start des Anlassers der Brennkraftmaschine zum Zeitpunkt t_{M} kurzzeitig abfällt, um anschließend auf einen Wert zu steigen, der über der Normalspannung U_{N} liegt. Wird nun zum Zeitpunkt t_{H} die Heizvorrichtung 4 eingeschaltet, so fällt die Batteriespannung auf eine Spannung U_{E}, die als Referenzspannung gemessen wird. Der weitere Verlauf der Batteriespannung U_{B} ist davon abhängig, wie gut die Funktionsfähigkeit und die Kapazität der Batterie 5 ist.

In Figur 3 ist nach dem Zeitpunkt T_{H} eine erste Spannungskennlinie N eingezeichnet, die einer Batterie 5 mit einer ausreichend guten Kapazität entspricht. Bei einer ausreichend guten Kapazität fällt die Spannung U_{B} bis zum Zeitpunkt T_{E}, bei dem die Heizvorrichtung 4 abgeschaltet wird, nur einen geringen Wert unter die Referenzspannung U_{E}.

Weist jedoch die Batterie 5 eine schlechte Kapazität auf, so nimmt die Batteriespannung U_{B} einen Spannungsverlauf ein, der in Figur 3 als zweite Spannungskennlinie A dargestellt ist, bei dem die Batteriespannung U_{B} während des Beheizens deutlich unter die Referenzspannung U_{E} absinkt. Ergibt nun der Vergleich zwischen der Referenzspannung U_{E} mit der zweiten Spannungskennlinie A, daß die Batteriespannung U_{B} zum Zeitpunkt T_{A} um mehr als eine vorgegebene Differenzspannung ΔU von der Referenzspannung U_{E} abweicht, so schaltet das Steuergerät 6 zum Zeitpunkt T_{A} die Heizvorrichtung 4 ab. Nach dem Abschalten der Heizvorrichtung 4 steigt die Batteriespannung U_{B} aufgrund der Aufladung durch den Generator 19 wieder auf einen Wert, der über der Normalspannung U_{N} liegt.

Die Batteriespannung U_{B} wird während des elektrischen Beheizens des Katalysators 3 laufend mit der Referenzspannung U_{E} verglichen, so daß gewährleistet ist, daß eine zu große Entladung der Batterie 5 vermieden wird.

Die Batteriespannung U_{B} wird zudem mit der Mindestspannung Uₘᵢₙ verglichen, damit neben dem relativen Abfall der Spannung auch ein absoluter Spannungsabfall überwacht wird. Fällt die Batteriespannung U_{B} unter die Mindestspannung Uₘᵢₙ, so schaltet das Steuergerät 6 die Heizvorrichtung 4 ab.

Weiterhin bietet das beschriebene Verfahren den Vorteil, die Kapazität der Batterie 5 zu schonen, da durch die Überwachung der Drehzahl und/oder der Luftmasse ein nicht vorteilhaftes Beheizen des Katalysators 3 vermieden wird.

## Patentansprüche

1. Verfahren zum elektrischen Beheizen eines Katalysators mit einer Spannungsquelle, bei dem die Spannung der Spannungsquelle überwacht wird, während der Katalysator beheizt wird, **dadurch gekennzeichnet**,
- daß nach dem Start des Beheizens die Spannung der Spannungsquelle (5) als Referenzspannung (U_{E}) gemessen wird,
- daß anschließend während des Beheizens die Spannung der Spannungsquelle als aktuelle Spannung (U_{B}) gemessen wird,
- daß die aktuelle Spannung (U_{B}) mit der Referenzspannung (U_{E}) verglichen wird, und daß das Beheizen abgebrochen wird, wenn die Differenz zwischen der aktuellen Spannung (U_{B}) und der Referenzspannung (U_{E}) größer als eine vorgegebene Differenzspannung ist.

2. Verfahren nach Anspruch 1, dadurch gekennzeichnet, daß die aktuelle Spannung (U_{B}) mit einer vorgegebenen Mindestspannung (U_{MIN}) verglichen wird, und daß das Beheizen des Katalysators (3) abgebrochen wird, wenn die aktuelle Spannung (U_{B}) kleiner als die vorgegebene Mindestspannung (U_{MIN}) ist.

3. Verfahren nach Anspruch 1, dadurch gekennzeichnet, daß die Drehzahl der Brennkraftmaschine (1) gemessen wird, daß die gemessene Drehzahl mit einer maximalen Drehzahl verglichen wird, und daß das Beheizen des Katalysators (3) abgebrochen wird, wenn die gemessene Drehzahl größer als die maximale Drehzahl ist.

4. Verfahren nach Anspruch 1, dadurch gekennzeichnet, daß der von der Brennkraftmaschine (1) angesaugte Luftmassenstrom gemessen wird, daß der gemessene Luftmassenstrom mit einem vorgegebenen maximalen Luftmassenstron verglichen wird, und daß das Beheizen des Katalysators (3) abgebrochen wird, wenn der gemessene Luftmassenstrom größer als der vorgegebene maximale Luftmassenstrom ist.

5. Verfahren nach Anspruch 1, dadurch gekennzeichnet, daß der von der Brennkraftmaschine (1) angesaugte Luftmassenstrom gemessen wird, daß der gemessene Luftmassenstrom mit einem vorgegebenen minimalen Luftmassenstrom verglichen wird, und daß das Beheizen des Katalysators (3) abgebrochen wird, wenn der gemessene Luftmassenstrom kleiner als der vorgegebene minimale Luftmassenstrom ist.
